# EUROPEAN PATENT SPECIFICATION

(11) **EP 4 299 341 B1**
(45) Date of publication and mention of the grant of the patent: **30.07.2025**
(21) Application number: 22181274.6
(22) Date of filing: 27.06.2022
(51) Int. Cl.: B60C 11/24

(54) **APPARATUS AND METHODS FOR CALCULATING AND/OR MONITORING A WEAR RATE OF A TIRE**
VORRICHTUNG UND VERFAHREN ZUR BERECHNUNG UND/ODER ÜBERWACHUNG DER ABNUTZUNGSRATE EINES REIFENS
APPAREIL ET PROCÉDÉS POUR CALCULER ET/OU SURVEILLER UN TAUX D'USURE D'UN PNEU

(43) Date of publication of application: 03.01.2024
(73) Proprietor: Bridgestone Europe NV/SA, 1930 Zaventem (BE)
(72) Inventor: BORTOLOTTO, Valerio, 00128 Roma (IT); ROSATI, Jessica, 00128 Roma (IT); Alleva, Lorenzo, 00128 Rome (IT)
(74) Representative: Marchetti, Alessio

(56) References cited:
- EP-A1- 3 318 422
- WO-A1-2009/080409
- WO-A1-2022/072144
- DE-A1- 102021 101 595
- US-A1- 2018 272 813
- US-A1- 2019 084 355
- US-A1- 2022 017 090
- US-A1- 2022 063 347

## Description

### TECHNICAL FIELD

### FIELD OF INVENTION

This disclosure is generally directed to computer-implemented methods and apparatus for calculating and/or monitoring a wear rate of a tire.

### BACKGROUND

Tire wear rate is an essential factor contributing to road safety. Changing tires not early enough may lead to dangerous traffic situations or even accidents, which may in turn lead to serious injuries or deaths as well as high financial liability risks. Being able to change tires just at the right time therefore is not only a question of safety but also a question of economy. Missing the right point of time to change the tires may result in high cost due to potential accidents or damages, taking the change too early may lead to additional fleet costs. A proper tire lifecycle management is also a matter of sustainability since changing tires too early may lead to waste of valuable resources.

Determining the right point of time to change tires is also an important success factor in vehicle logistics or fleet management. By being able to schedule changing tires of a vehicle right in time or scheduling changing tires in combination with maintenance of other components of a vehicle, non-operation periods can be kept as short as possible, resulting in cost savings and increased reliability especially in view of commercial applications. For example, when changing tires, other components of a vehicle having only a short remaining lifetime or maintenance interval may be replaced or serviced as well. In particular, when managing fleets comprising multiple long-haul trucks, monitoring the wear rate of the tires properly is important to e.g., decide which truck among the available trucks is suited best for a particular route.

Therefore, the ability to make a precise prediction of the right point of time to change tires is a key factor in order to render mobility and transport of goods safer, greener, more reliable as well as more cost-efficient.

In recent years, various methods and systems for monitoring the tire wear rate of a vehicle based on data from tire integrated sensors and vehicle dynamics have been developed. However, there is still a need to improve accuracy of tire wear estimation, at least for some particular applications.

EP 3 800 072 A1 provides a technique for measuring a wear rate of a tire tread using tendency of a peak value of acceleration of the tire. According to an embodiment of this disclosure, a tire wear measuring apparatus includes: a signal receiver configured to measure acceleration inside the tire for each point inside the tire; a signal analyzer configured to receive signal information from the signal receiver and estimate a tread wear rate of the tire using a peak value of acceleration in longitudinal direction perpendicular to an axial direction of the tire from among acceleration signals inside the tire; a transmitter configured to receive analysis information, which is information on the tread wear rate of the tire, from the signal analyzer and transmit the analysis information; and a control module configured to receive the analysis information from the transmitter and generate a control signal for the vehicle to which the tire is installed. A physical change thereof is verified using a Flexible Ring tire model which is a mathematical model.

EP 3 741 589 A1 discloses a tire wear estimator, comprising a tire measurement system which is adapted to be mounted in or on an inner surface of the tire. The tire measurement system comprises a sensor adapted for sensing a physical property of the tire, and an acquisition system adapted for sampling a signal of the sensor into memory, to acquire a perturbation in the sampled data which is induced by a contact patch of the tire when the sensor is mounted in or on an inner surface of the tire. A sample rate of the acquisition system is high enough such that at least one oscillation, which is indicative of a tread depth of the tire, becomes detectable in the sampled data in and/or around the perturbation.

Another computer-implemented method for calculating a wear rate of a tire is known from US2022017090 A1.

With the rise of IoT (Internet of Things) products, nowadays a more robust and more versatile toolchain is available than ever before. Based on IoT technologies, a method involving a tire mounted sensor is able to acquire a list of tire in-usage information and an algorithm, that uses as input the tire mounted sensor prediction to generate a more reliable and accurate tire wear estimation model allowing precise predictions of the remaining tread depth, residual mileage or residual time before it is time to change a tire.

### SUMMARY

The above objective is achieved by the present disclosure of various computer-implemented methods and apparatus for calculating and/or monitoring the wear rate of a tire.

According to a first aspect, the invention provides a computer-implemented method for calculating a wear rate of a tire, comprising providing an aggregation of residual tread depth, RTD, assessments based at least in part on data obtained from at least one sensor attached to at least one tire of a vehicle, generating a mathematical model of the tire wear rate based at least in part on the provided aggregation of RTD assessments and calculating the tire wear rate based at least in part on the generated mathematical model of the tire wear rate.

According to an example of the first aspect, providing the aggregation of RTD assessments may further comprise performing, for each RTD assessment among the provided aggregation of RTD assessments, a series of RTD assessments based at least in part on the data of the at least one sensor attached to the at least one tire of the vehicle within a pre-selected span of time and/or mileage starting at a determined point of time during operation of the vehicle and/or a determined mileage of the at least one tire of the vehicle, removing one or more outliers among the performed series of RTD assessments and calculating an average value for the performed series of RTD assessments, with the one or more outliers removed. The average value may comprise any kind of mean such as Pythagorean means, the median, the mode, the mid-range or weighted means.

According to a further example of the first aspect, the provided aggregation of RTD assessments comprises two or more RTD assessments.

According to another example of the first aspect, generating the mathematical model of the tire wear rate based at least in part on the provided aggregation of RTD assessments further comprises selecting one of a plurality of pre-stored algorithms based at least in part on the provided aggregation of RTD assessments.

According to yet another example of the first aspect, selecting one of a plurality of pre-stored algorithms for generating the mathematical model of the tire wear rate based at least in part on the provided aggregation of RTD assessments further comprises providing the aggregation of RTD assessments as input to a plurality of algorithms, running the plurality of algorithms on the provided aggregation of RTD measurements and choosing an algorithm of the plurality of algorithms based at least in part on the running of the plurality of algorithms.

According to another example of the first aspect, the data obtained from at least one sensor attached to the at least one tire of the vehicle comprise at least one of radial acceleration, rolling lateral acceleration, footprint size estimation, inflation pressure, tire temperature, tire speed estimation.

According to another example of the first aspect, the method further comprises providing telematics information of the vehicle and verifying the output of the generated mathematical model of the tire wear rate based at least in part on the provided telematics information of the vehicle.

According to a further example of the first aspect, the telematics information of the vehicle includes at least one of vehicle usage, tire pressure, tractor load, region, country, longitudinal acceleration, lateral acceleration, speed, GPS coordinates, odometer, type of road, load, tire inflation pressure, gear shifts, engine RPMs, wheel speed, throttle/brake pedal position, tire temperature, external temperature, steering wheel angle.

According to another example of the first aspect, the tire wear rate comprises at least one of the estimated residual tread depth of the tire, the remaining mileage of the tire and the remaining time before change of the tire according to a configured minimum tread depth.

In one example of the first aspect, the method comprises reporting at least one of the calculated tire wear rate, the estimated residual tread depth of the tire, the remaining mileage of the tire and the remaining time before change of the tire according to a configured minimum tread depth to a control system.

In a further example of the first aspect, the control system is arranged in the vehicle.

In a further example of the first aspect, the control system is arranged outside the vehicle.

According to another example of the first aspect, the provided aggregation of RTD measurements is stored in the vehicle or within the at least one tire of the vehicle.

According to another example of the first aspect, the provided aggregation of RTD measurements is stored outside of the vehicle.

According to a second aspect, the disclosure provides an apparatus for calculating a wear rate of a tire, comprising means for providing an aggregation of residual tread depth, RTD, assessments based at least in part on data obtained from at least one sensor attached to at least one tire of a vehicle, means for generating a mathematical model of the tire wear rate based at least in part on the provided aggregation of RTD assessments and means for calculating the tire wear rate based at least in part on the generated mathematical model of the tire wear rate.

In an example of the second aspect, the apparatus comprises means configured to perform any of the methods disclosed herein.

Further benefits and advantages of the present invention will become apparent after a careful reading of the detailed description with appropriate reference to the accompanying drawings.

### BRIEF DESCRIPTION OF THE DRAWINGS

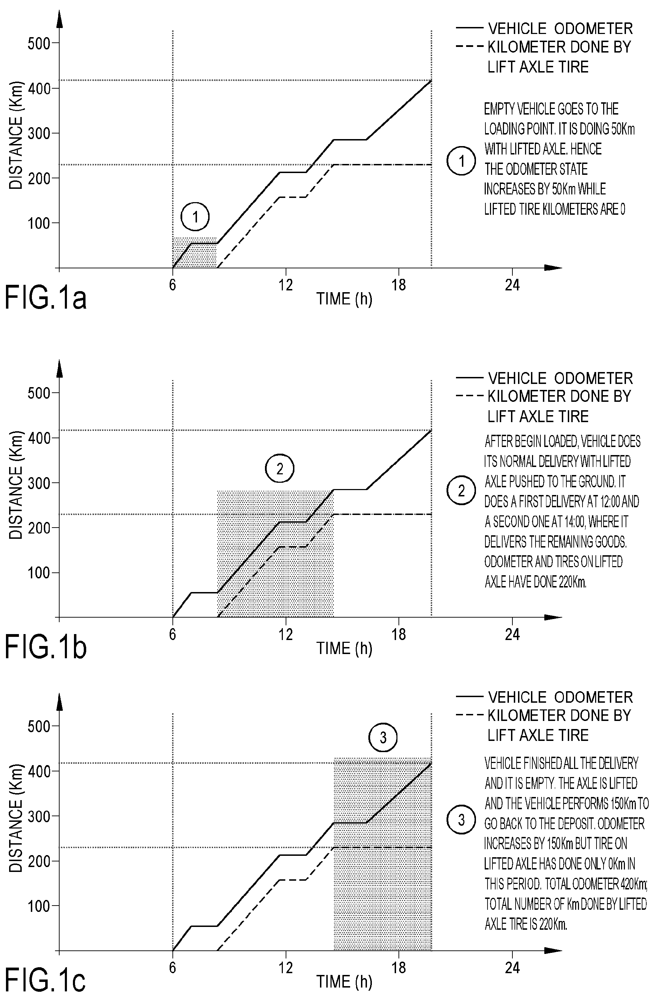

Figs. 1a, b and c illustrate an example involving a comparison of the performance of a tire wear model relying on vehicle dynamics and a respective model based at least in part on data obtained from at least one sensor attached to at least one tire of a vehicle, in the case of a truck with one or more lifted axle tires, according to the present disclosure.

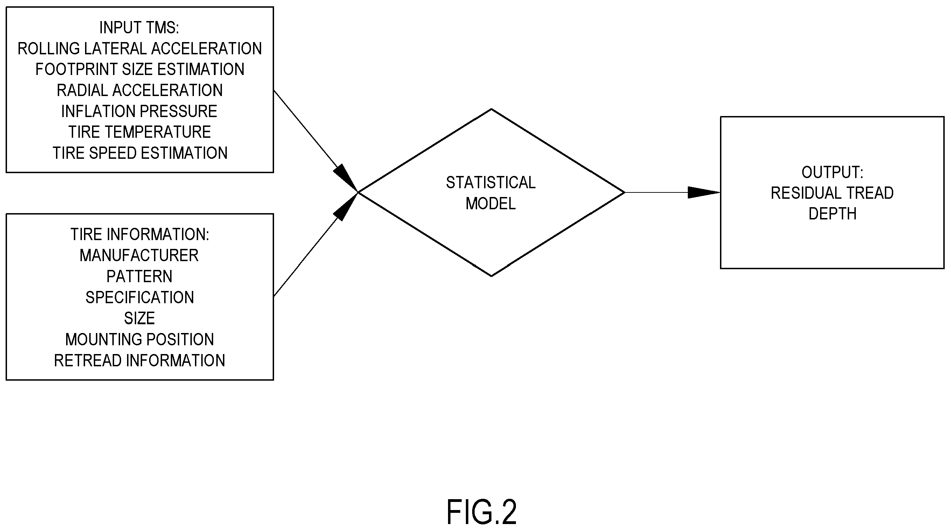

Fig. 2 illustrates a block diagram of a first system for estimating the residual tread depth of at least one tire of a vehicle, according to the present disclosure.

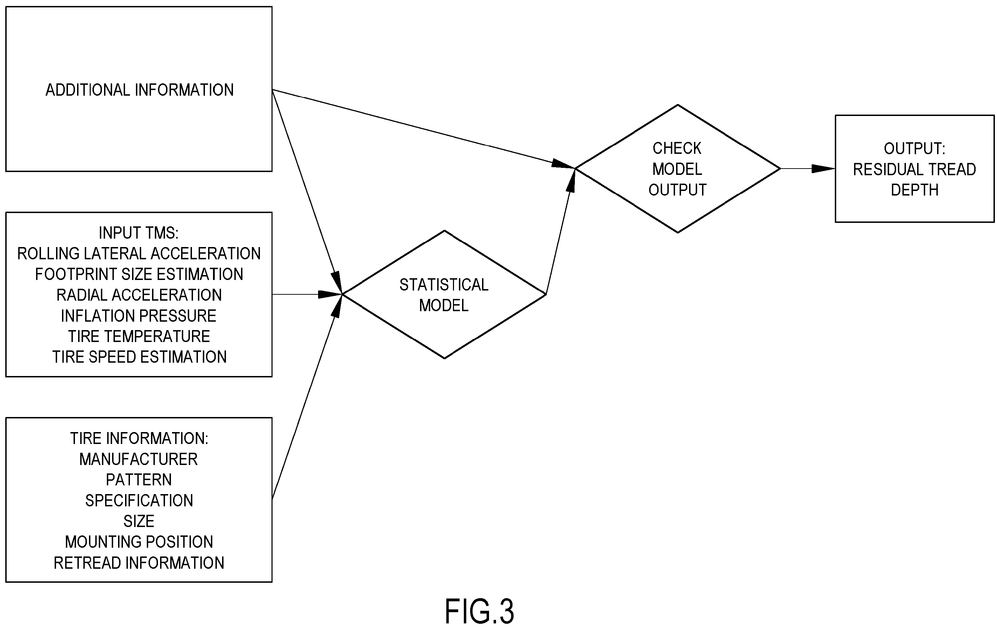

Fig. 3 illustrates a block diagram of a second system, which is an extension of the first system illustrated by Fig. 2, for estimating the residual tread depth of at least one tire of a vehicle, according to the present disclosure.

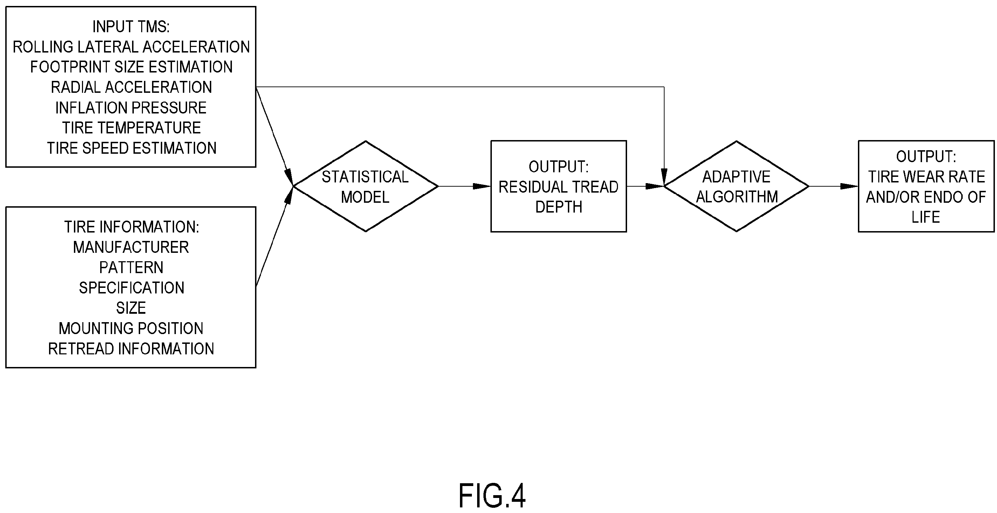

Fig. 4 illustrates a block diagram of a third system for calculating a wear rate of a tire which is based on the first system (as e.g. shown in Fig. 2) or the second system (as e.g. shown in Fig. 3) for estimating the residual tread depth of at least one tire of a vehicle, according to the present disclosure.

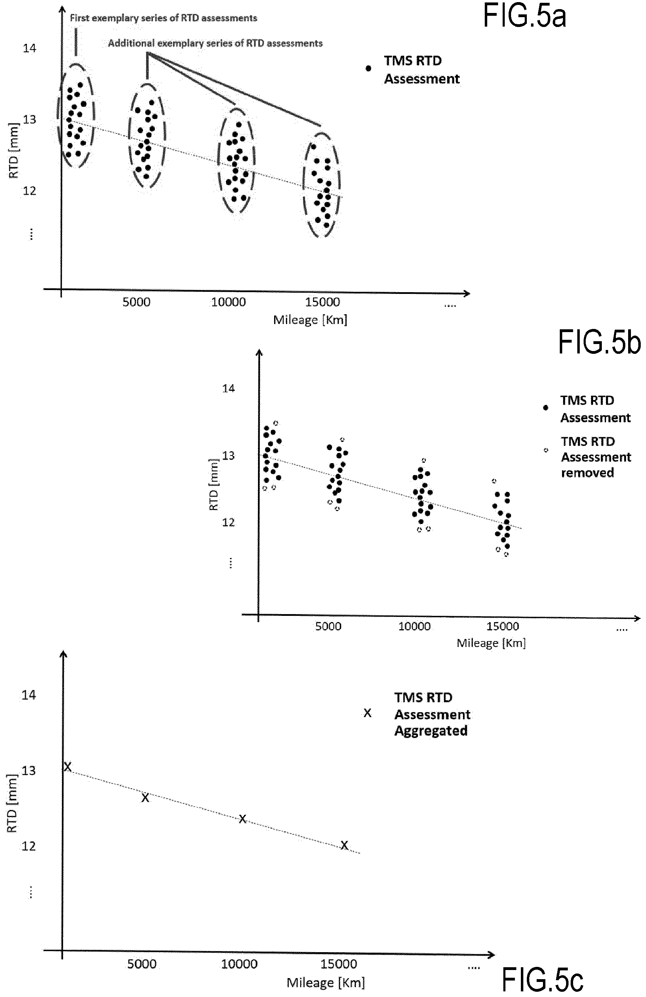

Fig. 5a illustrates a first aspect of providing an aggregation of residual tread depth assessments based at least in part on data obtained from at least one sensor attached to at least one tire of a vehicle comprising performing, for each RTD assessment among the provided aggregation of RTD assessments, a series of RTD assessments based at least in part on the data of the at least one sensor attached to the at least one tire of the vehicle.
Fig. 5b illustrates a second aspect of providing an aggregation of residual tread depth assessments based at least in part on data obtained from at least one sensor attached to at least one tire of a vehicle comprising removing one or more outliers among the performed series of RTD assessments according to the present disclosure.
Fig. 5c illustrates a third aspect of providing an aggregation of residual tread depth assessments based at least in part on data obtained from at least one sensor attached to at least one tire of a vehicle comprising calculating an average value for the performed series of RTD assessments, with the one or more outliers removed, according to the present disclosure.

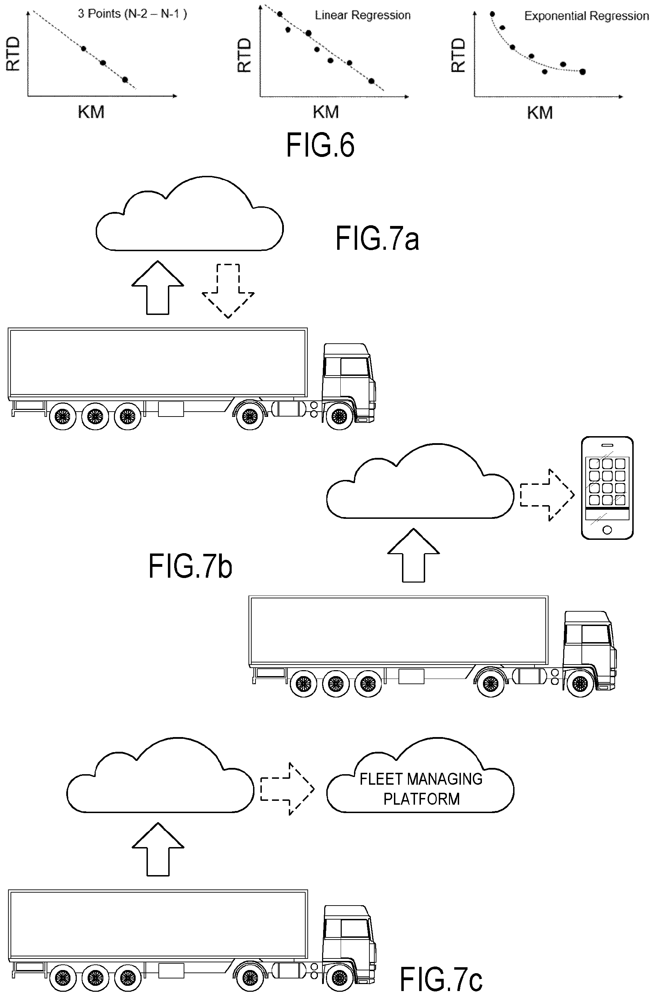

Fig. 6 illustrates, in the form of three charts, exemplary pre-stored algorithms used in the course of generating a model for calculating tire wear, according to the present disclosure.
Fig. 7a illustrates an exemplary data flow between a vehicle and a cloud for a possible providing of an aggregation of residual tread depth assessments or a reporting of the calculated tire wear, including estimated residual tread depth, remaining mileage of the tire, and/or the remaining time before change according to a configured minimum tread depth, according to the present disclosure.
Fig. 7b illustrates an exemplary data flow between a vehicle, a cloud and a user computing device for a possible providing of an aggregation of residual tread depth assessments or a possible reporting of the calculated tire wear, including estimated residual tread depth, remaining mileage of the tire, and/or the remaining time before change according to a configured minimum tread depth, according to the present disclosure.
Fig. 7c illustrates an exemplary data flow between a vehicle, a cloud and a control system for a possible providing of an aggregation of residual tread depth assessments or a possible reporting of the calculated tire wear, including estimated residual tread depth, remaining mileage of the tire, and/or the remaining time before change according to a configured minimum tread depth, according to the present disclosure.

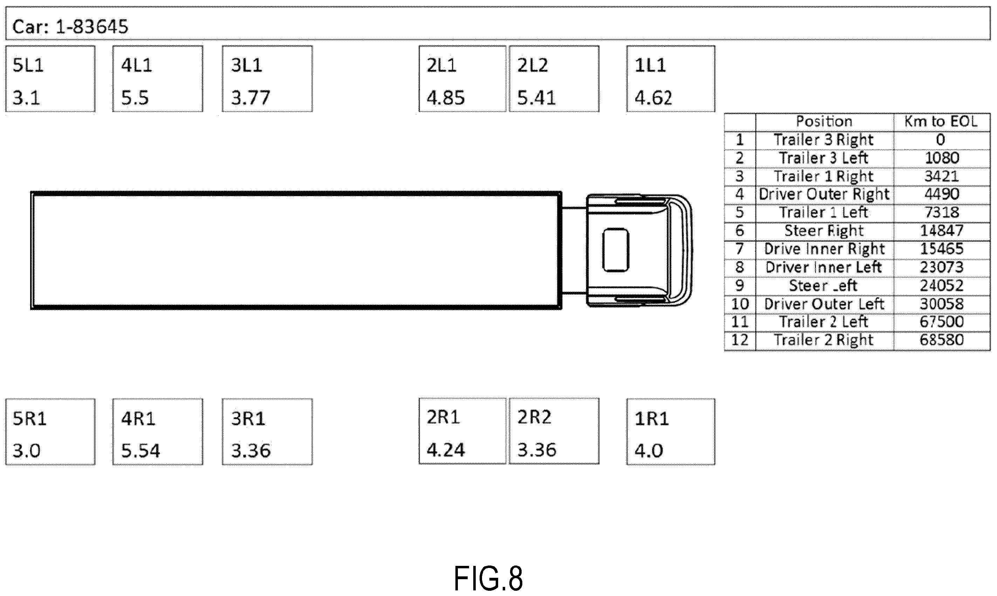

Fig. 8 illustrates an exemplary fleet manager platform to which a calculated tire wear rate may be reported, according to the present disclosure.

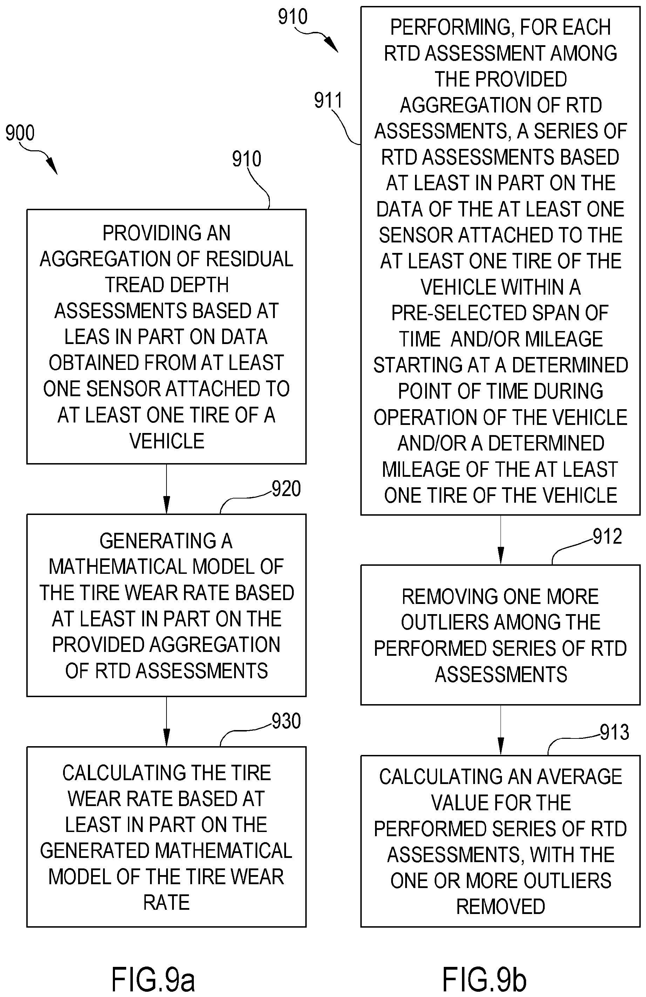

Fig. 9a illustrates a computer-implemented method 900 for calculating the wear rate of a tire, according to the present disclosure.
Fig. 9b illustrates further aspects of providing an aggregation of RTD assessments, according to the present disclosure.

### DETAILED DESCRIPTION

The present invention provides computer-implemented methods and apparatus for calculating the wear rate of a tire. The computer-implemented methods and apparatus according to this disclosure offer many advantages.

Methods for estimating the tire wear which are based on vehicle dynamics information, e.g., sensed by a sensor attached to a tire of a vehicle and a statistical model have been successfully developed. However, in some instances the estimated tire wear may show a bias due to vehicle dynamic effects. Therefore, the resulting estimation may not in all cases be highly accurate.

In order to increase the accuracy of the estimated tire wear, approaches based on vehicle telematics information, i.e., the odometer state of a vehicle may be used. By relying on the vehicle odometer, the mileage of a tire can in general be estimated with very good accuracy. However, in some vehicle usage scenarios such as for trucks (e.g., for lifted axles) or for vehicles which undergo several tire changes during the typical life span of a tire (e.g., changing from summer tires to winter tires), such conventional approaches introduce additional effort. This is for three main reasons:

First, in case a tire management system relies on vehicle telematics information, after any change of tires, the new tires need to be paired to the respective vehicle. Within large fleets, this procedure goes along with additional effort for the fleet manager and is prone to errors leading to inconsistent fleet management data.

Second, for correct predictions of the mileage and wear rate of trailer tires, a respective ad hoc monitoring system is needed. For a truck, the odometer data is only available for the tires of the tractor but not for the trailer. In case a trailer is disconnected from a tractor and/or connected to a different tractor without a respective monitoring, the accuracy of the model for tire wear estimation will decrease.

Third, a respective method needs additional input data in case a tire is mounted on a lifted axle. In case the information about the status of the axle is not available to the model, the estimated number of kilometers done by the respective tires and therefore the accuracy of the estimated wear rate will decrease as well.

The underlying invention discloses a computer-implemented method for calculating a wear state of a tire which combines the simplicity of the first approach based on a tire sensor with the increased accuracy of the second approach based on vehicle telematics information. At the same time, the additional effort which comes along with the second approach can be considerably reduced.

The computer-implemented method for calculating a wear rate of a tire comprises providing an aggregation of residual tread depth (RTD) assessments based at least in part on data obtained from at least one sensor attached to at least one tire of a vehicle, generating a mathematical model of the tire wear rate based at least in part on the provided aggregation of RTD assessments and calculating the tire wear rate based at least in part on the generated mathematical model of the tire wear rate.

Figs. 1 a, b and c illustrate the difference of the kilometers travelled by a vehicle itself, and a tire that is part of a lifted axle, and thus illustrates a comparison of the approach based on vehicle telematics information without proper monitoring of the lifted axles of a truck and the method for calculating a tire wear rate as disclosed herein. The horizontal axis of each of Figs. 1a, b and c shows the time in hours of a typical working day of a truck. The vertical axis of each of Figs. 1a, b and c shows the estimated distance travelled of a particular axis of the truck. Furthermore, the black solid line of each of Figs. 1a, b and c indicates the estimation of the mileage done using a conventional approach. The black dashed line of each of Figs. 1a, b and c shows the estimated mileage based on the computer-implemented method described herein.

As it can be seen from Fig. 1a, in the morning, the truck starts to travel towards a loading point which is reached after about 50 km (during this distance the third axle is lifted and hence no kilometers are done from the respective lifted axle tires. At the loading point, the trailer is loaded. The real distance travelled by tires on the lifted axle is 0 km. However, the respective truck has already travelled for about 50 km. When the truck is loaded, the lifted third axle will be brought down to the ground to distribute the load on all tires. In many cases, once a truck is loaded it goes to one or more locations for unloading.

The area indicated with ① in Fig. 1a identifies the empty vehicle going to the loading point. It is doing 50 km with lifted axle. Hence the odometer state increases by 50 km while the kilometers of the lifted tire remain zero.

In the example of Figure 1b, two different locations are identified. At the first one, which is reached at around 12:00, the truck is only partially unloaded and hence the third axle is kept down to the ground. At the second location, which is reached at around 14:00, the truck is unloaded completely.

The area indicated with ② in Fig. 1b identifies when, after being loaded, the vehicle does its normal delivery with the lift axle being pushed to the ground. The vehicle does a first delivery at 12:00 and a second one at 14:00, where it delivers the remaining goods. Odometer and tires on lift axle have done 220km since the vehicle was first loaded.

As it is illustrated by Fig. 1c, after the truck has been unloaded completely, the third axle gets lifted again and the truck goes back to its original location. In case vehicle telematics information is used and the mileage is simply estimated based on the odometer state of the truck, at this point, the vehicle telematics based approach shows considerable drawbacks. Compared to such a conventional method, the difference observed is 220 km (lower horizontal dotted line) travelled by the lifted tire versus 420 kilometers (upper horizontal dotted line) travelled by the vehicle. As a result, without a monitoring system regarding the lifted axles of a trailer, using the vehicle telematics based approach to estimate the tire life will lead to an estimated tire mileage considerably larger than the actual mileage.

The area indicated with ③ in Fig. 1c identifies when the vehicle finished all the delivery and it is empty. The lift axle is lifted and the vehicle runs 150 km to go back to the deposit. Odometer increases by 150km but tires on the lifted axle has run only 0 km in this period. Total odometer is 420 km; total kilometers run by lift axle tires is 220km.

The underlying invention helps to avoid such errors and therefore allows determining the optimum point in time for replacing the tires of a vehicle more accurately. As a result, the underlying invention renders mobility of people as well as transportation of goods safer, greener, more reliable and more cost efficient.

### Remaining tread depth estimation based on tire mounted sensor (TMS) information

Fig. 2 illustrates a block diagram of a first system for estimating the residual tread depth of at least one tire of a vehicle.

The system comprises a tire mounted sensor (TMS) able to acquire a list of in-usage information of a tire. The in-usage information of the tire comprises at least one of radial acceleration, rolling lateral acceleration, footprint size estimation, inflation pressure, tire temperature and tire speed estimation. The in-usage information of the tire is provided by the TMS to a statistical model for estimating the residual tread depth of a tire.

Furthermore, tire information comprising at least one of the tire manufacturer, the tire pattern, the specification of the tire, the size of the tire, the mounting position of the tire and retread information of the tire is provided to the statistical model for estimating the residual tread depth of the tire.

Based at least in part on the in-usage data of the tire and the tire information, the residual tread depth is estimated by the statistical model.

Fig. 3 shows a flow chart of a second system for estimating the residual tread depth of at least one tire of a vehicle. The second system is an extended version of the first system.

Additional information may be provided to the statistical model for estimating the residual tread depth. The additional information comprises at least one of vehicle manufacturer, vehicle chassis, vehicle load, accelerations, speed, GPS coordinates, type of road, engine load, gear shifts, engine RPM, wheel speed, throttle/brake pedal position, tire temperature, external temperature, steering wheel angle, additional RTD in operation measurements.

After estimating the remaining tread depth based at least in part on the additional information, the in-usage data of the tire and the tire information, the model output may be further verified based at least in part on the additional information.

Fig. 4 illustrates a block diagram of a third system for calculating a wear rate of a tire based on the first system or the second system for estimating the residual tread depth of at least one tire of a vehicle. An aggregation of residual tread depth assessments based at least in part on data obtained from at least one sensor attached to at least one tire of a vehicle is provided to an adaptive algorithm suitable for generating a mathematical model of the tire wear rate based at least in part on the provided aggregation of RTD assessments. In some examples, the system additionally provides the data obtained from the at least one sensor attached to the at least one tire of the vehicle to the adaptive algorithm. The adaptive algorithm calculates the tire wear rate or the expected remaining mileage of lifetime of the tire.

Fig. 5a illustrates a first aspect of providing an aggregation of residual tread depth assessments based at least in part on data obtained from at least one sensor attached to at least one tire of a vehicle. On the horizontal axis of Fig. 5a, the mileage (KM) is shown. On the vertical axis, the remaining tread depth is indicated. The upper left corner represents a state where the tire is new, i.e., the remaining tread depth is in accordance with the technical data when a tire is sold and the mileage of the tire is zero. With increasing mileage, the remaining tread depth decreases. For example, for a new tire the remaining tread depth is supposed to be about 13 mm.

At a determined point of time during usage of a vehicle or at a determined mileage of a tire, a series of residual tread depth assessments is initiated. Each residual tread depth assessment of a series of residual tread depth assessments is based at least in part on data of at least one sensor attached to at least one tire of a vehicle. The complete series of assessments is performed within a pre-selected span of time and/or mileage starting at a determined point of time during operation of the vehicle and/or a determined mileage of the at least one tire of the vehicle.

For example, the determined mileage of the at least one tire of the vehicle is about 0 km, i.e., the tire is new. The pre-selected mileage is 1000 km. At 0 km, a first series (cf. red circle in Fig. 5a) of multiple remaining tread depth assessments is initiated. Each of the multiple remaining tread depth assessments is performed within the pre-selected mileage of 1000 km.

Apart from a first series of RTD assessments, Fig. 5a illustrates providing multiple additional series of RTD assessments. For example, in Fig. 5a three additional series of RTD assessments at a mileage of 5000 km, 10000 km and 15000 km are highlighted (cf. red circles in Fig. 5a).

Fig. 5b illustrates another aspect of providing an aggregation of residual tread depth assessments based at least in part on data obtained from at least one sensor attached to at least one tire of a vehicle. Again, on the horizontal axis of Fig. 5b, the mileage (KM) is shown. On the vertical axis, the remaining tread depth is indicated. In order to decrease a potential bias due to vehicle dynamics effects within the multiple series of RTD assessments, outliers among the performed series of RTD assessments are removed. For example, within each series of RTD assessments, a group of single RTD assessments showing a higher variance than others within the same series can be reduced to single points. Removing outliers of each series of RTD assessments can either be performed right after a series of RTD assessments has been finished, periodically, e.g., within a pre-selected span of time or a pre-selected mileage of the tire or when the assessments of a series are needed as inputs for further calculations and/or estimations.

Fig. 5c illustrates a third aspect of providing an aggregation of residual tread depth assessments based at least in part on data obtained from at least one sensor attached to at least one tire of a vehicle. After the removing of outliers of a series of RTD assessments, for the respective series of RTD assessments, an average value of the RTD is calculated. The average value may comprise any kind of mean such as Pythagorean means, the median, the mode, the mid-range or weighted means. The calculation of the average value can either be performed right after a series of RTD assessments has been finished, periodically, e.g., within a pre-selected span of time or a pre-selected mileage of the tire or when a respective average value is needed as input for further calculations and/or estimations.

Fig. 6 illustrates an aspect of generating a mathematical model of the tire wear rate based at least on part on the provided aggregation of RTD measurements, where one of a plurality of pre-stored algorithms is selected. Selecting one of a plurality of pre-stored algorithms may comprise providing an aggregation of RTD assessments as input to a plurality of algorithms, running the plurality of algorithms on the provided aggregation of RTD measurements and choosing an algorithm of the plurality of algorithms based at least in part on the running of the plurality of algorithms.

As an example, Fig. 6 shows three different charts for three different pre-stored algorithms. For each of the three graphs, on the vertical axis, the remaining tread depth and on the horizontal axis the mileage of at least one tire as read from the odometer and/or from the tire mounted sensor of a vehicle (KM) is shown. Again, the upper left corner of each graph represents a state where the tire is new, i.e., the remaining tread depth is in accordance with the technical data when a tire is sold and the mileage of the tire is zero. With increasing mileage, the remaining tread depth decreases.

The filled black dots in each of the graphs represent an average value of a series of RTD assessments as described in connection with Fig. 5a to Fig. 5c. For example, in the first graph, three average values of RTD assessments, in the second graph, seven average values of RTD assessments and in the third graph as well seven average values of RTD assessments have been calculated.

The three algorithms illustrated by the three graphs may run in series or at least in part in parallel and are suited to find the best algorithm for generating a mathematical model of the tire wear rate based at least on part on the provided aggregation of RTD measurements.

More generally, the example illustrated in Fig. 6 shows that after two or more aggregations of RTD assessments based at least in part on data obtained from at least one sensor attached to at least one tire of a vehicle have been provided, various pre-stored algorithms such as 3 points, linear regression, exponential regression, logarithmic regression or a neural network may be run. The algorithm among the pre-stored and run algorithms which is closest to the provided aggregations of RTD assessments is selected for calculating the tire wear rate based at least in part on the generated mathematical model of the tire wear rate.

In one aspect, the pre-stored algorithms may be continuously modified, refined or replaced/updated by the respective provider.

### Providing of an aggregation of residual tread depth assessments or reporting of a tire wear rate

Fig. 7a, 7b and 7c illustrate different ways of how an aggregation of RTD assessments may be provided or a calculated tire wear rate may be reported. The transmission of data such as an aggregation of RTD assessments or a calculated tire wear rate are illustrated by black arrows. The black arrows may, alternatively or in addition, illustrate the providing of an aggregation of RTD assessments or a transmission of a calculated tire wear rate, or in other words, the output of the applied mathematical models, in cases where the calculation is performed in the vehicle, or at a component outside the vehicle not shown in Fig. 7a to Fig. 7c. In any event, the dotted arrows indicate the providing of an aggregation of RTD assessments or the reporting of the calculated tire wear rate or model output.

As illustrated by Fig 7a, in one aspect, the mathematical model of the tire wear rate may be generated outside a vehicle. Likewise, the tire wear rate may be calculated outside the vehicle, e.g., in a cloud computing environment. In this example, an aggregation of RTD assessments may be provided to a cloud computing device. Within the cloud computing device, the generation of the model and the calculation of the tire wear may take place and the calculated tire wear may be reported to at least the respective vehicle.

As it is shown by Fig. 7b and 7c, in addition, or alternatively, the report may be transmitted to a user computing device such as a smartphone, a notebook, a PC or a tablet or to a fleet managing platform.

In other examples as shown by Fig. 7b and 7c, the tire wear rate may be calculated in the vehicle or in a tire of the vehicle. In this case, the calculated tire wear rate may be reported from the vehicle or the tire of the vehicle to at least one of a user computing device or a fleet managing platform. A respective fleet managing platform/software may be stored and run on a cloud computing device/server. In the respective fleet managing software, there may be a digital representation of each vehicle of a fleet of at least one vehicle. The digital representation of the vehicle may comprise technical data of the vehicle such as the brand, the vehicle model, the number of axes, the used tires etc. Once a wear rate of a tire has been calculated using one of the methods according to the present disclosure, the calculated tire wear rate may be reported to the fleet managing application.

Within a fleet managing application as illustrated by Fig. 8, the calculated tire wear rate may be associated with the digital representation of the respective vehicle. This association may be performed on a per tire basis.

As a result, the application may be capable to display the tire wear rate of each tire of a vehicle. In some aspects, the residual time or mileage of each tire of a vehicle may be displayed. Based on the displayed information, a user of the fleet managing platform may be provided with detailed information with respect to at least one of the calculated tire wear rate, the residual tread depth, the residual mileage, and the residual life time of each tire of a vehicle. If certain conditions are fulfilled, an alert message may be issued, e.g., to the driver, fleet manager, or any other user.

### Computer-implemented methods for calculating and/or monitoring the wear rate of a tire

Fig. 9a shows a flowchart illustrating a computer-implemented method 900 for calculating and/or monitoring a wear rate of a tire. The operations of the computer-implemented method may be implemented by a computing device.

At 910, an aggregation of residual tread depth, RTD, assessments based at least in part on data obtained from at least one sensor attached to at least one tire of a vehicle is provided.

At 920, a mathematical model of the tire wear rate based at least in part on the provided aggregation of RTD assessments is generated.

At 930, the tire wear rate is calculated based at least in part on the generated mathematical model of the tire wear rate.

Fig. 9b shows a flowchart further illustrating providing the aggregation of RTD assessments.

At 911, for each RTD assessment among the provided aggregation of RTD assessments, a series of RTD assessments based at least in part on the data of the at least one sensor attached to the at least one tire of the vehicle within a pre-selected span of time and/or mileage starting at a determined point of time during operation of the vehicle and/or a determined mileage of the at least one tire of the vehicle is performed.

At 912, one or more outliers among the performed series of RTD assessments are removed.

At 913, an average value for the performed series of RTD assessments, with the one or more outliers removed, is calculated.

The provided aggregation of RTD assessments comprises two or more RTD assessments.

## Claims

1. A computer-implemented method (900) for calculating a wear rate of a tire, the method comprising:
providing (910) an aggregation of residual tread depth, RTD, assessments based at least in part on data obtained from at least one sensor attached to at least one tire of a vehicle;
generating (920) a mathematical model of the tire wear rate based at least in part on the provided aggregation of RTD assessments; and
calculating (930) the tire wear rate based at least in part on the generated mathematical model of the tire wear rate;
**characterised in that** generating the mathematical model of the tire wear rate based at least in part on the provided aggregation of RTD assessments further comprises selecting one of a plurality of pre-stored algorithms based at least in part on the provided aggregation of RTD assessments.

2. The method of claim 1, wherein providing (910) the aggregation of RTD assessments further comprises:
performing (911), for each RTD assessment among the provided aggregation of RTD assessments, a series of RTD assessments based at least in part on the data of the at least one sensor attached to the at least one tire of the vehicle within a pre-selected span of time and/or mileage starting at a determined point of time during operation of the vehicle and/or a determined mileage of the at least one tire of the vehicle;
removing (912) one or more outliers among the performed series of RTD assessments; and
calculating (913) an average value for the performed series of RTD assessments, with the one or more outliers removed.

3. The method of any one of claims 1 or 2, wherein the provided aggregation of RTD assessments comprises two or more RTD assessments.

4. The method of claim 1, wherein selecting one of a plurality of pre-stored algorithms for generating the mathematical model of the tire wear rate based at least in part on the provided aggregation of RTD assessments further comprises:
providing the aggregation of RTD assessments as input to a plurality of algorithms;
running the plurality of algorithms on the provided aggregation of RTD measurements; and
choosing an algorithm of the plurality of algorithms based at least in part on the running of the plurality of algorithms.

5. The method of any of claims 1 to 4, wherein the data obtained from at least one sensor attached to the at least one tire of the vehicle comprise at least one of radial acceleration, rolling lateral acceleration, footprint size estimation, inflation pressure, tire temperature, tire speed estimation.

6. The method of any one of claims 1 to 5, further comprising:
providing telematics information of the vehicle; and
verifying the output of the generated mathematical model of the tire wear rate based at least in part on the provided telematics information of the vehicle.

7. The method of claim 6, wherein the telematics information of the vehicle includes at least one of vehicle usage, tire pressure, tractor load, region, country, longitudinal acceleration, lateral acceleration, speed, GPS coordinates, odometer, type of road, load, tire inflation pressure, gear shifts, engine RPMs, wheel speed, throttle/brake pedal position, tire temperature, external temperature, steering wheel angle.

8. The method of any one of claims 1 to 7, wherein the tire wear rate comprises at least one of the estimated residual tread depth of the tire, the remaining mileage of the tire and the remaining time before change of the tire according to a configured minimum tread depth.

9. The method of claim 8, further comprising:
reporting at least one of the calculated tire wear rate, the estimated residual tread depth of the tire, the remaining mileage of the tire and the remaining time before change of the tire according to a configured minimum tread depth to a control system.

10. The method of claim 9, wherein the control system is arranged in the vehicle.

11. The method of claim 9, where the control system is arranged outside the vehicle.

12. The method of any of claims 1 to 11, wherein the provided aggregation of RTD measurements is stored in the vehicle or within the at least one tire of the vehicle.

13. The method of any of claims 1 to 11, wherein the provided aggregation of RTD measurements is stored outside of the vehicle.

14. An apparatus for calculating a wear rate of a tire, comprising:
means for providing an aggregation of residual tread depth, RTD, assessments based at least in part on data obtained from at least one sensor attached to at least one tire of a vehicle;
means for generating a mathematical model of the tire wear rate based at least in part on the provided aggregation of RTD assessments; and
means for calculating the tire wear rate based at least in part on the generated mathematical model of the tire wear rate;
**characterised in that** generating the mathematical model of the tire wear rate based at least in part on the provided aggregation of RTD assessments further comprises selecting one of a plurality of pre-stored algorithms based at least in part on the provided aggregation of RTD assessments.

15. The apparatus of claim 14 comprising means configured to perform any of the methods of claims 2-13.

## Patentansprüche

1. Computerimplementiertes Verfahren (900) zum Berechnen einer Reifenverschleißrate, das Verfahren umfassend:
Bereitstellen (910) einer Aggregation von Bewertungen der Restprofiltiefe (RTD), die zumindest teilweise auf Daten basieren, die von mindestens einem Sensor gewonnen werden, der an mindestens einem Reifen eines Fahrzeugs angebracht ist;
Generieren (920) eines mathematischen Modells der Reifenverschleißrate, das zumindest teilweise auf der bereitgestellten Aggregation von RTD-Bewertungen basiert; und
Berechnen (930) der Reifenverschleißrate zumindest teilweise basierend auf dem generierten mathematischen Modell der Reifenverschleißrate;
**dadurch gekennzeichnet, dass** das Generieren des mathematischen Modells der Reifenverschleißrate, das zumindest teilweise auf der bereitgestellten Aggregation von RTD-Bewertungen basiert, ferner das Auswählen eines von einer Vielzahl von vorgespeicherten Algorithmen, die zumindest teilweise auf der bereitgestellten Aggregation von RTD-Bewertungen basieren, umfasst.

2. Verfahren nach Anspruch 1, wobei das Bereitstellen (910) der Aggregation von RTD-Bewertungen ferner umfasst:
Durchführen (911) einer Reihe von RTD-Bewertungen für jede RTD-Bewertung aus der bereitgestellten Aggregation von RTD-Bewertungen, die zumindest teilweise auf den Daten des mindestens einen Sensors basieren, der an dem mindestens einen Reifen des Fahrzeugs innerhalb einer vorab ausgewählten Zeitspanne und/oder Kilometerleistung befestigt ist, beginnend zu einem bestimmten Zeitpunkt während des Betriebs des Fahrzeugs und/oder einer bestimmten Kilometerleistung des mindestens einen Reifens des Fahrzeugs;
Entfernen (912) eines oder mehrerer Ausreißer aus der durchgeführten Reihe von RTD-Bewertungen; und
Berechnen (913) eines Durchschnittswerts für die durchgeführte Reihe von RTD-Bewertungen, wobei der eine oder die mehreren Ausreißer entfernt werden.

3. Verfahren nach einem der Ansprüche 1 oder 2, wobei die bereitgestellte Aggregation von RTD-Bewertungen zwei oder mehr RTD-Bewertungen umfasst.

4. Verfahren nach Anspruch 1, wobei das Auswählen eines von einer Vielzahl von vorgespeicherten Algorithmen zum Generieren des mathematischen Modells der Reifenverschleißrate zumindest teilweise auf der Grundlage der bereitgestellten Aggregation von RTD-Bewertungen ferner umfasst:
Bereitstellen der Aggregation von RTD-Bewertungen als Eingabe für eine Vielzahl von Algorithmen;
Ausführen der Vielzahl von Algorithmen auf der bereitgestellten Aggregation von RTD-Messungen; und
Auswählen eines Algorithmus aus der Vielzahl von Algorithmen, zumindest teilweise basierend auf der Ausführung der Vielzahl von Algorithmen.

5. Verfahren nach einem der Ansprüche 1 bis 4, wobei die von mindestens einem an mindestens einem Reifen des Fahrzeugs angebrachten Sensor erhaltenen Daten mindestens eines der folgenden umfassen: Radialbeschleunigung, Querbeschleunigung beim Rollen, Schätzung der Aufstandsfläche, Reifendruck, Reifentemperatur, Schätzung der Reifengeschwindigkeit.

6. Verfahren nach einem der Ansprüche 1 bis 5, ferner umfassend:
Bereitstellen von Telematikinformationen des Fahrzeugs; und
Überprüfen der Ausgabe des generierten mathematischen Modells der Reifenverschleißrate zumindest teilweise basierend auf den bereitgestellten Telematikinformationen des Fahrzeugs.

7. Verfahren nach Anspruch 6, wobei die Telematikinformationen des Fahrzeugs mindestens die Fahrzeugnutzung, den Reifendruck, die Traktorlast, die Region, das Land, die Längsbeschleunigung, die Querbeschleunigung, die Geschwindigkeit, die GPS-Koordinaten, den Kilometerzähler, den Straßentyp, die Last, die Gangschaltungen, die Motordrehzahlen, die Raddrehzahl, die Gas-/Bremspedalstellung, die Reifentemperatur, die Außentemperatur und den Lenkradwinkel einschließen.

8. Verfahren nach einem der Ansprüche 1 bis 7, wobei die Reifenverschleißrate mindestens eines der folgenden Elemente umfasst: die geschätzte Restprofiltiefe des Reifens, die verbleibende Kilometerleistung des Reifens und die verbleibende Zeit bis zum Reifenwechsel gemäß einer konfigurierten Mindestprofiltiefe.

9. Verfahren nach Anspruch 8, ferner umfassend:
Melden mindestens eines von der berechneten Reifenverschleißrate, der geschätzten Restprofiltiefe, der verbleibenden Reifenlaufleistung und der verbleibenden Zeit bis zum Wechsel gemäß einer konfigurierten Mindestprofiltiefe an ein Steuersystem.

10. Verfahren nach Anspruch 9, wobei das Steuersystem im Fahrzeug angeordnet ist.

11. Verfahren nach Anspruch 9, wobei das Steuersystem außerhalb des Fahrzeugs angeordnet ist.

12. Verfahren nach einem der Ansprüche 1 bis 11, wobei die bereitgestellte Aggregation von RTD-Messungen im Fahrzeug oder in mindestens einem Reifen des Fahrzeugs gespeichert wird.

13. Verfahren nach einem der Ansprüche 1 bis 11, wobei die bereitgestellte Aggregation von RTD-Messungen außerhalb des Fahrzeugs gespeichert wird.

14. Vorrichtung zum Berechnen er Reifenveschleißrate, umfassend:
Mittel zum Bereitstellen einer Aggregation von Bewertungen der Restprofiltiefe (RTD), die zumindest teilweise auf Daten basieren, die von mindestens einem Sensor gewonnen werden, der an mindestens einem Reifen eines Fahrzeugs angebracht ist;
Mittel zum Generieren eines mathematischen Modells der Reifenverschleißrate, das zumindest teilweise auf der bereitgestellten Aggregation von RTD-Bewertungen basiert; und
Mittel zum Berechnen der Reifenverschleißrate, die zumindest teilweise auf dem generierten mathematischen Modell der Reifenverschleißrate basiert;
**dadurch gekennzeichnet, dass** das Generieren des mathematischen Modells der Reifenverschleißrate, das zumindest teilweise auf der bereitgestellten Aggregation von RTD-Bewertungen basiert, ferner das Auswählen eines von einer Vielzahl von vorgespeicherten Algorithmen, die zumindest teilweise auf der bereitgestellten Aggregation von RTD-Bewertungen basieren, umfasst.

15. Vorrichtung nach Anspruch 14 umfassend Mittel, die konfiguriert sind, um jedes der Verfahren der Ansprüche 2 bis 13 ausführen können.

## Revendications

1. Procédé (900) mis en œuvre par ordinateur destiné à calculer un taux d'usure d'un pneumatique, le procédé comprenant :
la fourniture (910) d'une agrégation d'évaluations de la profondeur résiduelle de la bande de roulement, RTD, basées au moins en partie sur des données obtenues à partir d'au moins un capteur fixé à au moins un pneumatique d'un véhicule ;
la génération (920) d'un modèle mathématique du taux d'usure du pneumatique basé au moins en partie sur l'agrégation fournie d'évaluations RTD ; et
le calcul (930) du taux d'usure du pneumatique basé au moins en partie sur le modèle mathématique généré du taux d'usure du pneumatique ;
**caractérisé en ce que** la génération du modèle mathématique du taux d'usure du pneumatique basé au moins en partie sur l'agrégation fournie d'évaluations RTD comprend en outre la sélection d'un parmi une pluralité d'algorithmes préenregistrés basée au moins en partie sur l'agrégation fournie d'évaluations RTD.

2. Procédé selon la revendication 1, dans lequel la fourniture (910) de l'agrégation d'évaluations RTD comprend en outre :
l'exécution (911), pour chaque évaluation RTD parmi l'agrégation fournie d'évaluations RTD, d'une série d'évaluations RTD basées au moins en partie sur les données de l'au moins un capteur fixé à l'au moins un pneumatique du véhicule dans un laps de temps et/ou un kilométrage présélectionné commençant à un moment déterminé pendant le fonctionnement du véhicule et/ou un kilométrage déterminé de l'au moins un pneumatique du véhicule ;
la suppression (912) d'une ou de plusieurs valeurs aberrantes dans la série d'évaluations RTD exécutées ; et
le calcul (913) d'une valeur moyenne pour la série d'évaluations RTD exécutées, en supprimant l'une ou les plusieurs valeurs aberrantes.

3. Procédé selon l'une quelconque des revendications 1 ou 2, dans lequel l'agrégation fournie d'évaluations RTD comprend deux évaluations RTD ou plus.

4. Procédé selon la revendication 1, dans lequel la sélection d'un parmi une pluralité d'algorithmes préenregistrés pour générer le modèle mathématique du taux d'usure du pneumatique basé au moins en partie sur l'agrégation fournie d'évaluations RTD comprend en outre :
la fourniture de l'agrégation d'évaluations RTD en tant que données d'entrée à une pluralité d'algorithmes ;
l'exécution de la pluralité d'algorithmes sur l'agrégation fournie de mesures RTD ; et
la sélection d'un algorithme parmi la pluralité d'algorithmes basée au moins en partie sur l'exécution de la pluralité d'algorithmes.

5. Procédé selon l'une quelconque des revendications 1 à 4, dans lequel les données obtenues à partir d'au moins un capteur fixé à l'au moins un pneumatique du véhicule comprennent au moins l'un parmi l'accélération radiale, l'accélération latérale de roulement, l'estimation de la taille de l'empreinte, la pression de gonflage, la température du pneumatique, l'estimation de la vitesse du pneumatique.

6. Procédé selon l'une quelconque des revendications 1 à 5, comprenant en outre :
la fourniture d'informations télématiques du véhicule ; et
la vérification de la sortie du modèle mathématique généré du taux d'usure des pneumatiques basé au moins en partie sur les informations télématiques fournies par le véhicule.

7. Procédé selon la revendication 6, dans lequel les informations télématiques du véhicule comportent au moins l'un parmi l'utilisation du véhicule, la pression du pneumatique, la charge du tracteur, la région, le pays, l'accélération longitudinale, l'accélération latérale, la vitesse, les coordonnées GPS, le compteur kilométrique, le type de route, la charge, la pression de gonflage des pneumatiques, les changements de vitesse, le régime du moteur, la vitesse de roue, la position de la pédale d'accélérateur/frein, la température du pneumatique, la température extérieure, l'angle du volant de direction.

8. Procédé selon l'une quelconque des revendications 1 à 7, dans lequel le taux d'usure du pneumatique comprend au moins l'un parmi la profondeur résiduelle estimée de la bande de roulement du pneumatique, le kilométrage restant du pneumatique et le temps restant avant le remplacement du pneumatique en fonction d'une profondeur minimale configurée de la bande de roulement.

9. Procédé selon la revendication 8, comprenant en outre :
la communication d'au moins l'un parmi le taux d'usure de pneumatique calculé, la profondeur de sculpture résiduelle estimée du pneumatique, le kilométrage restant du pneumatique, et le temps restant avant le remplacement du pneumatique en fonction d'une profondeur de sculpture minimale configurée à un système de commande.

10. Procédé selon la revendication 9, dans lequel le système de commande est agencé dans le véhicule.

11. Procédé selon la revendication 9, dans lequel le système de commande est agencé à l'extérieur du véhicule.

12. Procédé selon l'une quelconque des revendications 1 à 11, dans lequel l'agrégation fournie de mesures RTD est stockée dans le véhicule ou dans l'au moins un pneumatique du véhicule.

13. Procédé selon l'une quelconque des revendications 1 à 11, dans lequel l'agrégation de mesures RTD fournie est stockée à l'extérieur du véhicule.

14. Appareil de calcul du taux d'usure d'un pneumatique, comprenant :
des moyens pour fournir une agrégation d'évaluations de la profondeur résiduelle de la bande de roulement, RTD, basées au moins en partie sur des données obtenues à partir d'au moins un capteur fixé à au moins un pneumatique d'un véhicule ;
des moyens pour générer un modèle mathématique du taux d'usure du pneumatique basé au moins en partie sur l'agrégation fournie d'évaluations RTD ; et
des moyens pour calculer le taux d'usure du pneumatique basé au moins en partie sur le modèle mathématique généré du taux d'usure du pneumatique ;
**caractérisé en ce que** la génération du modèle mathématique du taux d'usure du pneumatique basé au moins en partie sur l'agrégation fournie d'évaluations RTD comprend en outre la sélection d'un d'une pluralité d'algorithmes préenregistrés basée au moins en partie sur l'agrégation fournie d'évaluations RTD.

15. Appareil selon la revendication 14 comprenant des moyens configurés pour exécuter un quelconque des procédés selon les revendications 2 à 13.
